# EUROPÄISCHE PATENTSCHRIFT

(11) **EP 2 612 121 B1**
(45) Veröffentlichungstag und Bekanntmachung des Hinweises auf die Patenterteilung: **07.01.2015**
(21) Anmeldenummer: 11749763.6
(22) Anmeldetag: 25.07.2011
(51) Int. Cl.: G01K 13/00, G01L 19/00

(54) **KOMBISENSOR**
COMBINATION SENSOR
CAPTEUR COMBINÉ

(30) Priorität: 31.08.2010 DE 102010039970
(43) Veröffentlichungstag der Anmeldung: 10.07.2013
(73) Patentinhaber: ROBERT BOSCH GMBH, 70442 Stuttgart (DE)
(72) Erfinder: WOLF, Ronny, 99817 Eisenach (DE); DEISSLER, Markus, 74172 Neckarsulm (DE); LANGE, Joerg, 71735 Eberdingen (DE); ALBRECHT, Peter, 99817 Eisenach (DE)
(86) Internationale Anmeldenummer: PCT/EP2011/062714
(87) Internationale Veröffentlichungsnummer: WO 2012/028385

(56) Entgegenhaltungen:
- EP-A1- 1 605 149
- EP-A2- 0 889 213

## Beschreibung

Die vorliegende Erfindung betrifft einen Kombisensor gemäß dem Oberbegriff des Anspruches 1 sowie einen Verbrennungsmotor.

### Stand der Technik

Verbrennungsmotoren, insbesondere Hubkolbenverbrennungsmotoren, werden im Betrieb von einer Steuerungseinheit optimiert, um beispielsweise den Kraftstoffverbrauch zu verringern oder die Abgaswerte zu verbessern. Die Steuerungseinheit benötigt hierfür verschiedene Parameter, die von unterschiedlichen Sensoren erfasst werden. Beispielsweise werden von den Sensoren die Drehzahl des Verbrennungsmotors und die Motorlast erfasst, um die Zündung und die Einspritzung von Kraftstoff in den Verbrennungsraum zu optimieren. Die Verbrennungsluft wird dem Verbrennungsmotor im Allgemeinen durch ein Saugrohr zugeführt. An dem Saugrohr sind deshalb im Allgemeinen ein Sensor zur Erfassung des Druckes der Ansaugluft, ein Sensor zur Erfassung eines Drehwinkels einer Drosselklappe in dem Saugrohr und ein Sensor zur Erfassung der Temperatur der Ansaugluft angeordnet. Die verschiedenen Sensoren sind dabei jeweils einzeln mittels eines Kabels mit der Steuerungseinheit des Verbrennungsmotors verbunden. In dem Kabel sind jeweils Spannungsversorgungsleitungen und Signalübertragungsleitungen für den entsprechenden Sensor angeordnet.

Die EP 1 676 990 A1 und EP 1 605 149 A1 zeigen einen Sensor für einen Verbrennungsmotor mit einem Gehäuse, einen Sensor zur Erfassung eines Druckes der Ansaugluft, einen Sensor zur Erfassung eines Drehwinkels einer Drosselklappe und einen Sensor zur Erfassung der Temperatur der Ansaugluft. Dabei ist der Sensor zur Erfassung der Temperatur in Strömungsrichtung der Ansaugluft vor der Drosselklappe in dem Ansaugrohr angeordnet.

### Offenbarung der Erfindung

### Vorteile der Erfindung

Erfindungsgemäßer Kombisensor für einen Verbrennungsmotor, insbesondere für ein Kraftfahrzeug, umfassend ein Gehäuse, ein Rohr zum Durchleiten von Verbrennungsluft für den Verbrennungsmotor, einen Sensor zur Erfassung eines Druckes der Verbrennungsluft in dem Rohr, wobei durch einen Verbindungskanal eine fluidleitende Verbindung von dem Rohr zu dem Sensor zur Erfassung des Druckes der Verbrennungsluft besteht, vorzugsweise einen Sensor zur Erfassung einer Position einer Drosselvorrichtung in dem Rohr, vorzugsweise einen Sensor zur Erfassung einer Temperatur der Verbrennungsluft in dem Rohr, wobei der Kombisensor mit einem Ableitungskanal für den Verbindungskanal versehen ist und der Ableitungskanal in den Verbindungskanal und in das Rohr mündet. Ablagerungen an gasförmigen, flüssigen oder festen Stoffen in dem Verbindungskanal können damit aus dem Verbindungskanal durch den Ableitungskanal in das Rohr abgeleitet werden, so dass sich im dem Verbindungskanal im Wesentlichen keine Ablagerungen bilden. Ablagerungen in dem Verbindungskanal sind zu vermeiden, weil diese die Messung des Druckes der Verbrennungsluft mit dem Sensor zur Erfassung des Druckes beeinträchtigen, stören oder verfälschen können.

In einer weiteren Ausgestaltung ist der Verbindungskanal im Wesentlichen horizontal ausgerichtet und/oder der Sensor zur Erfassung des Druckes der Verbrennungsluft ist in dem Verbindungskanal, insbesondere im Bereich des Endes des Verbindungskanales, angeordnet.

In einer Variante mündet der Ableitungskanal im Bereich des Endes des Verbindungskanales in den Verbindungskanal und/oder der Ableitungskanal mündet unterhalb des Verbindungskanales mündet in das Rohr. Die Mündung des Ableitungskanales in das Rohr ist unterhalb der Mündung des Verbindungskanales in das Rohr angeordnet, so dass aus dem Ableitungskanal austretende feste oder flüssige Stoffe nicht in den Verbindungskanal gelangen können.

Vorzugsweise weist der Ableitungskanal ein Gefälle von einer Mündung in den Verbindungskanal zu einer Mündung in das Rohr auf. Damit können durch den Ableitungskanal feste, flüssige oder auch gasförmige Stoffe in das Rohr abgeleitet werden.

Insbesondere ist der Sensor zur Erfassung der Temperatur der Verbrennungsluft in Strömungsrichtung der Verbrennungsluft nach der Drosselvorrichtung in dem Rohr angeordnet und/oder der Sensor zur Erfassung des Druckes und/oder der Sensor zur Erfassung der Position der Drosselvorrichtung und/oder der Sensor zur Erfassung der Temperatur sind in das Gehäuse integriert. Die Sensoren sind damit in dem Gehäuse des Kombisensors integriert, so dass mit der Montage des Gehäuses des Kombisensors an einem Saugrohr oder einem Drosselklappengehäuse die Sensoren zur Erfassung der Parameter des Druckes und/oder der Position und/oder der Temperatur an dem Saugrohr vorhanden sind. Damit kann bei der Herstellung eines Verbrennungsmotors Montageaufwand vermieden werden, weil mit der Montage des Kombisensors die Sensoren befestigt werden.

In einer weiteren Ausgestaltung sind der Sensor zur Erfassung des Druckes und/oder der Sensor zur Erfassung der Position der Drosselvorrichtung und/oder der Sensor zur Erfassung der Temperatur wenigstens teilweise von dem Gehäuse umschlossen.

In einer weiteren Ausgestaltung besteht das Gehäuse wenigstens teilweise aus Metall und/oder aus Kunststoff.

In einer ergänzenden Ausführungsform ist das Gehäuse ein- oder mehrteilig.

In einer Variante dient ein Messstutzen in dem Rohr zur Erfassung der Temperatur.

Insbesondere ist der Messstutzen Bestandteil des Gehäuses. Bei der Montage des Kombisensors an dem Saugrohr wird auch der Messstutzen als Bestandteil des Gehäuses in den Innenraum des Saugrohres eingeführt zur Erfassung der Temperatur und des Druckes an der notwendigen Position bzw. Stelle innerhalb des Saugrohres.

Zweckmäßig ist an dem Messstutzen oder im Bereich des Messstutzens der Sensor zur Erfassung der Temperatur angeordnet.

Insbesondere ist das Rohr ein Saugrohr.

In einer weiteren Ausgestaltung ist von dem Sensor zur Erfassung der Position der Drosselvorrichtung die Position berührend bezüglich der Drosselvorrichtung und/oder einer Komponente, z. B. Welle, der Drosselvorrichtung, erfassbar oder ist berührungsfrei bezüglich der Drosselvorrichtung und/oder einer Komponente, z. B. Welle, der Drosselvorrichtung erfassbar.

Bei einer berührenden Erfassung der Position der Drosselvorrichtung bezüglich der Drosselvorrichtung und/oder einer Komponente, z. B. Welle, der Drosselvorrichtung kann die Position beispielsweise mittels eines Potentiometers erfassbar sein. Bei einer berührungsfreien Erfassung der Position der Drosselvorrichtung bezüglich der Drosselvorrichtung und/oder einer Komponente, z. B. Welle, der Drosselvorrichtung kann die Position beispielsweise mittels eines Hallsensors erfassbar sein.

In eine weiteren Ausgestaltung ist die Position der Drosselvorrichtung durch zwei redundante Sensoren mittels zweier Potentiometerspulen oder berührungslos ausführbar.

In einer zusätzlichen Ausführungsform ist der Sensor zur Erfassung der Position der Drosselvorrichtung ein Sensor eines EGAS.

In einer ergänzenden Variante sind Spannungsversorgungsleitungen und/oder Signalübertragungsleitungen sämtlicher Sensoren zu einem Kabelbaum oder Kabel zusammengefasst. In vorteilhafter Weise sind damit für die unterschiedlichen Sensoren an dem Kombisensor nicht mehr verschiedene Kabel erforderlich, sondern diese sind alle sämtlich in einem Kabelbaum oder in einem Kabel zusammengefasst.

In einer weiteren Variante sind die Spannungsversorgungsleitungen und/oder die Signalübertragungsleitungen sämtlicher Sensoren mittels nur eines Steckers mit einer Versorgungseinheit, insbesondere einer Steuerungseinheit und/oder einer Stromquelle des Verbrennungsmotors, verbindbar. Nach der Montage des Kombisensors an dem Saugrohr muss deshalb nur noch ein Stecker mit einem entsprechenden Gegenstecker verbunden werden, so dass sämtliche Sensoren des Kombisensors mit der Steuerungseinheit und der Stromquelle des Verbrennungsmotors verbunden sind zur Signalübertragung und zur Spannungsversorgung.

In einer weiteren Ausgestaltung ist die Drosselvorrichtung eine Drosselklappe und/oder es ist von dem Sensor zur Erfassung der Position der Drosselvorrichtung ein Drehwinkel erfassbar.

Zweckmäßig ist das Rohr ein separates Bauteil oder das Rohr ist Bestandteil des Gehäuses.

Ein erfindungsgemäßer Verbrennungsmotor insbesondere für ein Kraftfahrzeug oder ein Kraftrad, umfasst einen in dieser Schutzrechtsanmeldung beschriebenen Kombisensor.

Ein erfindungsgemäßes Kraftfahrzeug umfasst einen in dieser Schutzrechtsanmeldung beschriebenen Kombisensor und/oder einen in dieser Schutzrechtsanmeldung beschriebenen Verbrennungsmotor.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen Querschnitt eines Kombisensors an einem Saugrohr,
- Fig. 2: einen Teilschnitt A-A gemäß Fig. 1 des Kombisensors und

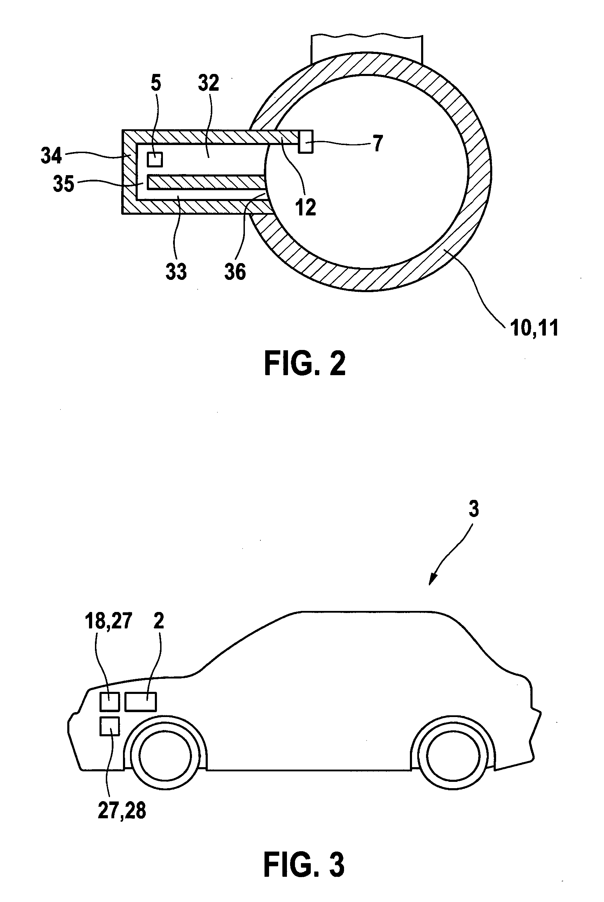

- Fig. 2: eine Ansicht eines Kraftfahrzeuges.

### Ausführungsformen der Erfindung

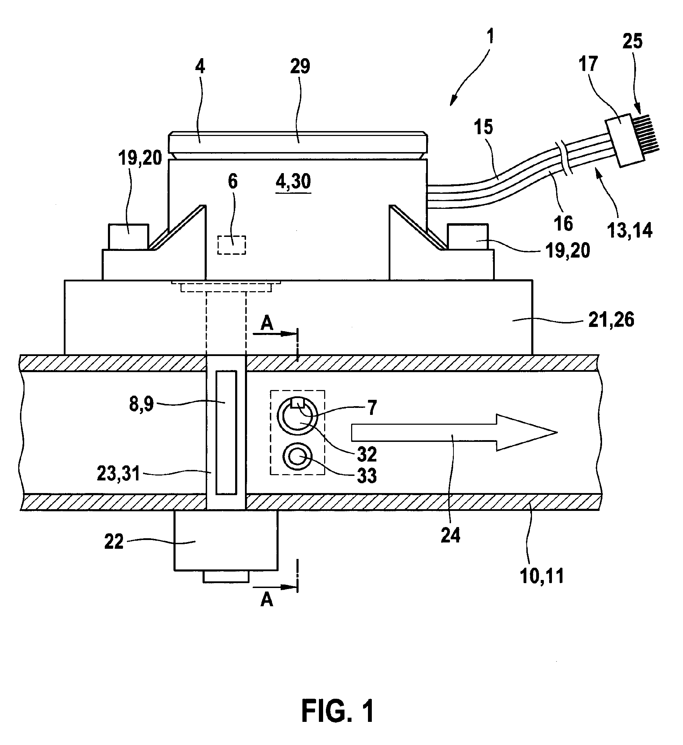

In Fig. 1 ist ein Kombisensor 1 im Querschnitt an einem Rohr 10 dargestellt. Das als Saugrohr 11 ausgebildete Rohr 10 dient dazu, Luft bzw. Verbrennungsluft als Fluid durch das Saugrohr 11 zu einem Verbrennungsmotor 2 eines Kraftfahrzeuges 3 zu leiten. Der Kombisensor 1 weist einen Sensor 5 zur Erfassung des Druckes der Verbrennungsluft, einen Sensor 6 zur Erfassung eines Drehwinkels einer als Drosselklappe 9 ausgebildeten Drosselvorrichtung 8 in dem Saugrohr 11 und einen Sensor 7 zur Erfassung der Temperatur der Verbrennungsluft auf. Sämtliche Sensoren 5, 6 und 7 sind an einem mehrteiligen Gehäuse 4 aus Kunststoff des Kombisensors 1 angeordnet bzw. in dieses integriert. An dem Saugrohr 11 ist ein als Drosselklappengehäuse 26 ausgebildetes Anschlusselement 21 vorhanden. An dem Anschlusselement 21 wird das Gehäuse 4 des Kombisensors 1 durch zwei als Schrauben 20 ausgebildete Befestigungsmittel 19 mechanisch befestigt. Das Gehäuse 4 umfasst unter anderem einen Deckel 29 und ein Rumpfgehäuse 30. Der Deckel 29 kann demontierbar oder nicht demontierbar am Rumpfgehäuse 30 befestigt sein. Die Verbindungsmittel zur Verbindung des Deckels 29 mit dem Rumpfgehäuse 30 sind in Fig. 1 nicht dargestellt.

In das Rohr 10 als Ansaugrohr 11 mündet ein im Wesentlichen horizontal ausgerichteter Verbindungskanal 32 (Fig. 1 und 2). Im Bereich eines Endes 34 des Verbindungskanales 32 ist der Sensor 5 zur Erfassung des Druckes der Verbrennungsluft angeordnet. Der Verbindungkanal 32 stellt eine fluidleitende Verbindung zu dem Saugrohr 11 her, so dass in dem Verbindungskanal 32 im Wesentlichen der gleiche Luftdruck herrscht wie im Bereich der Mündung des Verbindungskanales 32 in das Saugrohr 11. Damit wird von dem Sensor 5 der Luftdruck der Verbrennungsluft in Strömungsrichtung der Verbrennungsluft nach der Drosselklappe 9 in dem Saugrohr 11 erfasst, weil der Verbindungskanal 32 in Strömungsrichtung der Verbrennungsluft nach der Drosselvorrichtung 8 in das Rohr 10 mündet. Der Verbindungskanal 32 weist eine beliebige Querschnittsform auf, z. B. kreisförmig oder rechteckförmig und 32 ist im Wesentlichen horizontal ausgerichtet, d. h. die Steigung oder das Gefälle des Verbindungskanales 32 beträgt weniger als 10%, 5%, 2% oder 1%. In dem Verbindungskanal 32 können sich Ablagerungen an gasförmigen, flüssigen oder festen Stoffen bilden und/oder Wasser als Kondenswasser ansammeln, weil in der durch das Rohr 10 geleiteten Verbrennungsluft die Stoffe oder Feuchtigkeit enthalten sein können. Zur Vermeidung und Verhinderung derartiger Ansammlungen in dem Verbindungskanal 32 mündet im Bereich des Endes 34 des Verbindungskanales 32 ein Ableitungskanal 33 in den Verbindungskanal 32. Eine Mündung 36 des Ableitungskanales 33 in den Verbindungskanal 32 ist im Bereich des Endes 34 des Verbindungskanales 32 angeordnet, d. h. die Mündung 36 ist in einer Distanz von weniger als 50%, 30% oder 10% der Länge des Verbindungskanales 32 zu dem Ende 34 entfernt. Der Ableitungskanal 33 weist ein Gefälle zwischen 1% und 20%, vorzugsweise zwischen 2% und 10% von der Mündung 35 zu einer Mündung 35 in das Rohr 10 auf, so dass Flüssigkeiten, insbesondere Kondenswasser, von der Mündung 35 in das Rohr 10 abgeleitet werden können. Damit kann sich in dem Verbindungskanal 32 im Wesentlichen kein Kondenswasser ansammeln oder sich Ablagerungen an gasförmigen, flüssigen oder festen Stoffen bilden, weil diese durch den Ableitungskanal 33 in das Rohr 10 geleitet werden. Ferner entsteht in dem Verbindungskanal 32 und in dem Ableitungskanal 33 eine sehr schwache Luftströmung, um Gase aus dem Verbindungskanal 32 ableiten zu können. Diese Luftströmung ist jedoch so gering, dass dadurch die Messung des Druckes mit dem Sensor 5 in dem Verbindungskanal 32 nicht verfälscht wird. Der Ableitungskanal 33 weist eine beliebige Querschnittsform, z. B. kreisförmig oder rechteckförmig, auf. Der Sensor 5 ist innerhalb des Gehäuses 4 angeordnet bzw. in das Gehäuse 4 integriert, wobei in Fig. 2 das Gehäuse 4 sowie das Anschlusselement 21 nicht bzw. nur teilweise dargestellt sind. Das den Verbindungskanal 32 und den Ableitungskanal 33 begrenzende Material ist aus einem Bauteil hergestellt und vorzugsweise Bestandteil des Gehäuses 4, jedoch als ein ergänzendes Bauteil zu dem übrigen Gehäuse 4.

In Verlängerung des Gehäuses 4 ist an dem Verbindungskanal 32 außerdem ein Messstutzen 12 als Bestandteil des Gehäuses 4 vorhanden. Beim Befestigen des Verbindungskanales 32 und des Ableitungskanales 33 an dem Rohr 10 wird dabei der Messstutzen 12 in den Innenraum des Saugrohres 11 eingeführt. Der Sensor 7 zur Erfassung der Temperatur der Ansaugluft ist dabei am Ende des Messstutzens 12 vorhanden, so dass dadurch die Temperatur der Ansaugluft im Wesentlichen in der Mitte des Strömungsraumes des Saugrohres 11 gemessen wird. Die Strömungsrichtung der Verbrennungsluft ist in Fig. 1 durch einen Pfeil 24 dargestellt. Die Temperatur der Luft in dem Saugrohr 11 wird damit in Strömungsrichtung der Verbrennungsluft nach der Drosselklappe 9 gemessen. Der Messstutzen 12 dient damit zur Erfassung der Temperatur der Verbrennungsluft in Strömungsrichtung der Verbrennungsluft nach der Drosselklappe 9.

Die Drosselklappe 9 ist an einer Welle 23 als Komponente 31 für die Drosselklappe 9 befestigt. Aufgrund der Schnittbildung in Fig. 1 ist von der Drosselklappe 9 lediglich ein kleinerer Querschnitt sichtbar, so dass die wesentliche größere Ausdehnung in Längsrichtung der Drosselklappe 9 senkrecht auf der Zeichenebene der Fig. 1 steht. Die Welle 23 für die Drosselklappe 9 und damit auch die Drosselklappe 9 wird von einem elektrischen Stellmotor 22 bewegt. Es handelt sich damit um das Prinzip des EGAS. Abweichend hiervon kann die Drosselklappe 9 auch mechanisch mittels eines Seilzuges durch einen Gashebel bewegt werden (nicht dargestellt).

Die Sensoren 5, 6 und 7 müssen mit elektrischem Strom versorgt werden. Ferner sind die von den Sensoren 5, 6 und 7 erfassten Daten analog oder digital zu einer Steuerungseinheit 18 des Verbrennungsmotors 2 zu übertragen. Sämtliche Spannungsversorgungsleitungen 15 sämtlicher Sensoren 5, 6 und 7 und sämtliche Signalübertragungsleitungen 16 sämtlicher Sensoren 5, 6 und 7 sind zu einem Kabelbaum 13 oder einem Kabel 14 zusammengefasst bzw. in diesem angeordnet, so dass dadurch in vorteilhafter Weise für den Kombisensor 1 nur ein Kabel 14 bzw. ein Kabelbaum 13 erforderlich ist. Am Ende des Kabels 14 bzw. des Kabelbaumes 13 ist nur ein Stecker 17 mit Kontaktelementen 25 vorhanden. Nach der Montage des Kombisensors 1 auf dem Anschlusselement 21 muss deshalb nur noch der Stecker 17 in einen entsprechenden und nicht dargestellten Gegenstecker eingesteckt werden, um sämtliche Spannungsversorgungsleitungen 15 mit eine Stromquelle 28 als Versorgungseinheit 27 zu verbinden und sämtliche Signalübertragungsleitungen 16 mit der Steuerungseinheit 18 als Versorgungseinheit 27 zu verbinden. Die verschiedenen Spannungsversorgungsleitungen 15 der Sensoren 5, 6 und 7 sind aus Vereinfachungsgründen in Fig. 1 nur durch eine Spannungsversorgungsleitung 15 dargestellt. In gleicher Weise sind die verschiedenen Signalübertragungsleitungen 16 der Sensoren 5, 6 und 7 in Fig. 1 nur durch eine Signalübertragungsleitung 16 vereinfachend und symbolisierend dargestellt bzw. abgebildet.

In Fig. 3 ist das Kraftfahrzeug 3 mit dem Verbrennungsmotor 2 und der Stromquelle 28 und der Steuerungseinheit 18 als Versorgungseinheiten 27 dargestellt.

In einem zweiten, nicht dargestellten Ausführungsbeispiel ist der Sensor 7 zur Erfassung der Temperatur der Verbrennungsluft in dem Saugrohr 11 in Strömungsrichtung der Verbrennungsluft vor der Drosselvorrichtung 8 ausgebildet, wobei der Messstutzen 12 nicht an dem Verbindungskanal 32 ausgebildet ist. Hierzu ist der Messstutzen 12 in Strömungsrichtung der Verbrennungsluft vor der Drosselklappe 9 vorhanden. Mit dem Sensor 5 und dem Verbindungskanal 32 wird der Druck der Verbrennungsluft in Strömungsrichtung der Verbrennungsluft nach der Drosselklappe 9 erfasst.

Die Einzelheiten der verschiedenen Ausführungsbeispiele können miteinander kombiniert werden, sofern nichts Gegenteiliges erwähnt wird.

Insgesamt betrachtet sind mit dem erfindungsgemäßen Kombisensor 1 wesentliche Vorteile verbunden. Der Ableitungskanal 33 leitet Ablagerungen aus dem Verbindungskanal 32 in das Rohr 10, so dass sich in dem Verbindungskanal 32 im Wesentlichen keine Ablagerungen bilden, welche die Druckmessung mit dem Sensor 5 verfälschen könnten.

## Patentansprüche

1. Kombisensor (1) für einen Verbrennungsmotor (2), insbesondere für ein Kraftfahrzeug (3), umfassend
- ein Gehäuse (4),
- ein Rohr (10) zum Durchleiten von Verbrennungsluft für den Verbrennungsmotor (2),
- einen Sensor (5) zur Erfassung eines Druckes der Verbrennungsluft in dem Rohr (10), wobei durch einen Verbindungskanal (32) eine fluidleitende Verbindung von dem Rohr (10) zu dem Sensor (5) zur Erfassung des Druckes der Verbrennungsluft besteht,
- vorzugsweise einen Sensor (6) zur Erfassung einer Position einer Drosselvorrichtung (8) in dem Rohr (10),
- vorzugsweise einen Sensor (7) zur Erfassung einer Temperatur der Verbrennungsluft in dem Rohr (10),
**dadurch gekennzeichnet, dass**
der Kombisensor (1) mit einem Ableitungskanal (33) für den Verbindungskanal (32) versehen ist und der Ableitungskanal (33) in den Verbindungskanal (32) und in das Rohr (10) mündet.

2. Kombisensor nach Anspruch 1,
**dadurch gekennzeichnet, dass**
der Verbindungskanal (32) im Wesentlichen horizontal ausgerichtet ist und/oder
der Sensor (5) zur Erfassung des Druckes der Verbrennungsluft in dem Verbindungskanal (32), insbesondere im Bereich des Endes (34) des Verbindungskanales (32), angeordnet ist.

3. Kombisensor nach Anspruch 1 oder 2,
**dadurch gekennzeichnet, dass**
der Ableitungskanal (33) im Bereich eines Endes (34) des Verbindungskanales (32) in den Verbindungskanal (32) mündet und/oder
der Ableitungskanal (33) unterhalb des Verbindungskanales (32) in das Rohr (10) mündet.

4. Kombisensor nach einem oder mehreren der vorhergehenden Ansprüche,
**dadurch gekennzeichnet, dass**
der Ableitungskanal (33) ein Gefälle von einer Mündung (35) in den Verbindungskanal (32) zu einer Mündung in das Rohr (10) aufweist.

5. Kombisensor nach einem oder mehreren der vorhergehenden Ansprüche,
**dadurch gekennzeichnet, dass**
der Sensor (7) zur Erfassung der Temperatur der Verbrennungsluft in Strömungsrichtung der Verbrennungsluft nach der Drosselvorrichtung (8) in dem Rohr (10) angeordnet ist
und/oder
der Sensor (5) zur Erfassung des Druckes und/oder der Sensor (6) zur Erfassung der Position der Drosselvorrichtung (8) und/oder der Sensor (7) zur Erfassung der Temperatur in das Gehäuse (4) integriert sind.

6. Kombisensor nach einem oder mehreren der vorhergehenden Ansprüche,
**dadurch gekennzeichnet, dass**
der Sensor (5) zur Erfassung des Druckes und/oder der Sensor (6) zur Erfassung der Position der Drosselvorrichtung (8) und/oder der Sensor (7) zur Erfassung der Temperatur wenigstens teilweise von dem Gehäuse (4) umschlossen sind.

7. Kombisensor nach einem oder mehreren der vorhergehenden Ansprüche,
**dadurch gekennzeichnet, dass**
das Gehäuse (4) ein- oder mehrteilig ist.

8. Kombisensor nach einem oder mehreren der vorhergehenden Ansprüche,
**dadurch gekennzeichnet, dass**
ein Messstutzen (12) in dem Rohr (10) zur Erfassung der Temperatur dient.

9. Kombisensor nach Anspruch 8,
**dadurch gekennzeichnet, dass**
an dem Messstutzen (12) oder im Bereich des Messstutzens (12) der Sensor (7) zur Erfassung der Temperatur angeordnet ist.

10. Kombisensor nach einem oder mehreren der vorhergehenden Ansprüche,
**dadurch gekennzeichnet, dass**
das Rohr (10) ein Saugrohr (11) ist.

11. Kombisensor nach einem oder mehreren der vorhergehenden Ansprüche,
**dadurch gekennzeichnet, dass**
von dem Sensor (6) zur Erfassung der Position der Drosselvorrichtung (8) die Position berührend bezüglich der Drosselvorrichtung (8) und/oder einer Komponente (31), z. B. Welle (23), der Drosselvorrichtung (8) erfassbar ist oder berührungsfrei bezüglich der Drosselvorrichtung (8) und/oder einer Komponente (31), z. B. Welle (23), der Drosselvorrichtung (8) erfassbar ist.

12. Kombisensor nach einem oder mehreren der vorhergehenden Ansprüche,
**dadurch gekennzeichnet, dass**
Spannungsversorgungsleitungen (15) und/oder Signalübertragungsleitungen (16) sämtlicher Sensoren (5, 6, 7) zu einem Kabelbaum (13) oder einem Kabel (14) zusammengefasst sind.

13. Kombisensor nach einem oder mehreren der vorhergehenden Ansprüche,
**dadurch gekennzeichnet, dass**
die Spannungsversorgungsleitungen (15) und/oder die Signalübertragungsleitungen (16) sämtlicher Sensoren (5, 6, 7) mittels nur eines Steckers (17) mit einer Versorgungseinheit (27), insbesondere eine Steuerungseinheit (18) und/oder eine Stromquelle (28) des Verbrennungsmotors (2), verbindbar sind.

14. Kombisensor nach einem oder mehreren der vorhergehenden Ansprüche,
**dadurch gekennzeichnet, dass**
die Drosselvorrichtung (8) eine Drosselklappe (9) ist und/oder von dem Sensor (6) zur Erfassung der Position der Drosselvorrichtung (8) ein Drehwinkel erfassbar ist.

15. Verbrennungsmotor (2), insbesondere für ein Kraftfahrzeug (3),
**dadurch gekennzeichnet, dass**
der Verbrennungsmotor (2) einen Kombisensor (1) gemäß einem oder mehrerer der vorhergehenden Ansprüche umfasst.

## Claims

1. Combination sensor (1) for an internal combustion engine (2), in particular for a motor vehicle (3) comprising:
- a housing (4),
- a pipe (10) for feeding through of combustion air for the internal combustion engine (2),
- a sensor (5) for sensing a pressure of the combustion air in the pipe (10), wherein by means of a connecting duct (32) there is a fluid-conducting connection from the pipe (10) to the sensor (5) for sensing the pressure of the combustion air,
- preferably a sensor (6) for sensing the position of a throttle device (8) in the pipe (10), and
- preferably a sensor (7) for sensing a temperature of the combustion air in the pipe (10),
**characterized in that**
the combination sensor (1) is provided with a discharge duct (33) for the connecting duct (32), and the discharge duct (33) opens into the connecting duct (32) and into the pipe (10).

2. Combination sensor according to Claim 1
**characterized in that**
the connecting duct (32) is oriented essentially horizontally
and/or
the sensor (5) for sensing the pressure of the combustion air in the connecting duct (32) is arranged, in particular, in the region at the end (34) of the connecting duct (32).

3. Combination sensor according to Claim 1 or 2,
**characterized in that**
the discharge duct (33) opens into the connecting duct (32), in the region of one end (34) of the connecting duct (32),
and/or
the discharge duct (33) opens into the pipe (10) underneath the connecting duct (32).

4. Combination sensor according to one or more of the preceding claims,
**characterized in that**
the discharge duct (33) has a gradient from an orifice (35) in the connecting duct (32) to an orifice in the pipe (10).

5. Combination sensor according to one or more of the preceding claims,
**characterized in that**
the sensor (7) for sensing the temperature of the combustion air is arranged downstream of the throttle device (8) in the pipe (10) in the direction of flow of the combustion air,
and/or
the sensor (5) for sensing the pressure and/or the sensor (6) for sensing the position of the throttle device (8) and/or the sensor (7) for sensing the temperature are integrated into the housing (4).

6. Combination sensor according to one or more of the preceding claims,
**characterized in that**
the sensor (5) for sensing the pressure and/or- the sensor (6) for sensing the position of the throttle device (8) and/or the sensor (7) for sensing the temperature are enclosed at least partially by the housing (4).

7. Combination sensor according to one or more of the preceding claims,
**characterized in that**
the housing (4) is in one piece or multiple pieces.

8. Combination sensor according to one or more of the preceding claims,
**characterized in that**
a measuring connector (12) in the pipe (10) serves for sensing the temperature.

9. Combination sensor according to Claim 8,
**characterized in that**
the sensor (7) for sensing the temperature is arranged on the measuring connector (12) or in the region of the measuring connector (12).

10. Combination sensor according to one or more of the preceding claims,
**characterized in that**
the pipe (10) is a suction pipe (11).

11. Combination sensor according to one or more of the preceding claims,
**characterized in that**
the sensor (6) for sensing the position of the throttle device (8) can sense the position in a contact-forming fashion with respect to the throttle device (8) and/or a component (31), for example shaft (23), of the throttle device (8) or can sense it in a contactless fashion with respect to the throttle device (8) and/or a component (31), for example shaft (23), of the throttle device (8).

12. Combination sensor according to one or more of the preceding claims,
**characterized in that**
voltage supply lines (15) and/or voltage transmission lines (16) of all the sensors (5, 6, 7) can be combined to form a cable harness (13) or a cable (14).

13. Combination sensor according to one or more of the preceding claims,
**characterized in that**
the voltage supply lines (15) and/or the voltage transmission lines (16) of all the sensors (5, 6, 7) can be connected by means of just one plug (17) to a supply unit (27), in particular a control unit (18) and/or a power source (28) of the internal combustion engine (2).

14. Combination sensor according to one or more of the preceding claims,
**characterized in that**
the throttle device (8) is a throttle valve (9), and/or the sensor (6) for sensing the position of the throttle device (8) can sense a rotational angle.

15. Internal combustion engine (2), in particular for a motor vehicle (3),
**characterized in that**
the internal combustion engine (2) comprises a combination sensor (1) according to one or more of the preceding claims.

## Revendications

1. Capteur combiné (1) pour un moteur à combustion interne (2), en particulier pour un véhicule automobile (3), comprenant
- un boîtier (4),
- un tuyau (10) pour guider de l'air comburant pour le moteur à combustion interne (2),
- un capteur (5) pour détecter une pression de l'air comburant dans le tuyau (10), une liaison conduisant des fluides étant établie par un canal de liaison (32) entre le tuyau (10) et le capteur (5) pour détecter la pression de l'air comburant,
- de préférence un capteur (6) pour détecter une position d'un dispositif d'étranglement (8) dans le tuyau (10),
- de préférence un capteur (7) pour détecter une température de l'air comburant dans le tuyau (10),
**caractérisé en ce que**
le capteur combiné (1) est pourvu d'un canal de dérivation (33) pour le canal de liaison (32) et le canal de dérivation (33) débouche dans le canal de liaison (32) et dans le tuyau (10).

2. Capteur combiné selon la revendication 1,
**caractérisé en ce que**
le canal de liaison (32) est orienté essentiellement horizontalement
et/ou
le capteur (5) pour détecter la pression de l'air comburant est disposé dans le canal de liaison (32), en particulier dans la région de l'extrémité (34) du canal de liaison (32).

3. Capteur combiné selon la revendication 1 ou 2,
**caractérisé en ce que**
le canal de dérivation (33) débouche dans le canal de liaison (32) dans la région d'une extrémité (34) du canal de liaison (32)
et/ou
le canal de dérivation (33) débouche en dessous du canal de liaison (32) dans le tuyau (10).

4. Capteur combiné selon l'une quelconque ou plusieurs des revendications précédentes,
**caractérisé en ce que**
le canal de dérivation (33) présente un gradient depuis une embouchure (35) dans le canal de liaison (32) jusqu'à une embouchure dans le tuyau (10).

5. Capteur combiné selon l'une quelconque ou plusieurs des revendications précédentes,
**caractérisé en ce que**
le capteur (7) pour détecter la température de l'air comburant est disposé dans le tuyau (10) dans la direction d'écoulement de l'air comburant après le dispositif d'étranglement (8) et/ou
le capteur (5) pour détecter la pression et/ou le capteur (6) pour détecter la position du dispositif d'étranglement (8) et/ou le capteur (7) pour détecter la température sont intégrés dans le boîtier (4).

6. Capteur combiné selon l'une quelconque ou plusieurs des revendications précédentes,
**caractérisé en ce que**
le capteur (5) pour détecter la pression et/ou le capteur (6) pour détecter la position du dispositif d'étranglement (8) et/ou le capteur (7) pour détecter la température sont au moins partiellement entourés par le boîtier (4).

7. Capteur combiné selon l'une quelconque ou plusieurs des revendications précédentes,
**caractérisé en ce que**
le boîtier (4) est réalisé en une ou plusieurs parties.

8. Capteur combiné selon l'une quelconque ou plusieurs des revendications précédentes,
**caractérisé en ce**
**qu'**une tubulure de mesure (12) dans le tuyau (10) sert à détecter la température.

9. Capteur combiné selon la revendication 8,
**caractérisé en ce que**
le capteur (7) pour détecter la température est disposé au niveau de la tubulure de mesure (12) ou dans la région de la tubulure de mesure (12).

10. Capteur combiné selon l'une quelconque ou plusieurs des revendications précédentes,
**caractérisé en ce que**
le tuyau (10) est un tuyau d'aspiration (11).

11. Capteur combiné selon l'une quelconque ou plusieurs des revendications précédentes,
**caractérisé en ce que**
le capteur (6) pour détecter la position du dispositif d'étranglement (8) permet de détecter la position avec contact en se basant sur le dispositif d'étranglement (8) et/ou sur un composant (31), par exemple un arbre (23), du dispositif d'étranglement (8) ou sans contact en se basant sur le dispositif d'étranglement (8) et/ou sur un composant (31), par exemple un arbre (23), du dispositif d'étranglement (8).

12. Capteur combiné selon l'une quelconque ou plusieurs des revendications précédentes,
**caractérisé en ce que**
des conduites d'alimentation de tension (15) et/ou des conduites de transfert de signaux (16) de tous les capteurs (5, 6, 7) sont réunies pour former un faisceau de câbles (13) ou un câble (14).

13. Capteur combiné selon l'une quelconque ou plusieurs des revendications précédentes,
**caractérisé en ce que**
les conduites d'alimentation de tension (15) et/ou les conduites de transfert de signaux (16) de tous les capteurs (5, 6, 7) peuvent être connectées au moyen de seulement un connecteur (17) à une unité d'alimentation (27), en particulier une unité de commande (18) et/ou une source de courant (28) du moteur à combustion interne (2).

14. Capteur combiné selon l'une quelconque ou plusieurs des revendications précédentes,
**caractérisé en ce que**
le dispositif d'étranglement (8) est un volet d'étranglement (9) et/ou un angle de rotation peut être détecté par le capteur (6) pour détecter la position du dispositif d'étranglement (8).

15. Moteur à combustion interne (2), en particulier pour un véhicule automobile (3),
**caractérisé en ce que**
le moteur à combustion interne (2) comprend un capteur combiné (1) selon l'une quelconque ou plusieurs des revendications précédentes.
